(19)

Europäisches Patentamt
European Patent Office
Office européen des brevets

(11) **EP 4 345 946 A1**

(12) **EUROPEAN PATENT APPLICATION**
published in accordance with Art. 153(4) EPC

(43) Date of publication:
   **03.04.2024  Bulletin 2024/14**

(21) Application number: **22893113.5**

(22) Date of filing: **03.11.2022**

(51) International Patent Classification (IPC):
   *H01M 4/1395* (2010.01)    *H01M 4/1391* (2010.01)
   *H01M 4/36* (2006.01)    *H01M 4/38* (2006.01)
   *H01M 4/48* (2010.01)    *H01M 4/62* (2006.01)
   *H01M 4/134* (2010.01)    *H01M 4/131* (2010.01)
   *H01M 10/052* (2010.01)    *H01M 4/02* (2006.01)

(52) Cooperative Patent Classification (CPC):
   **H01M 4/02; H01M 4/131; H01M 4/134;
   H01M 4/1391; H01M 4/1395; H01M 4/36;
   H01M 4/38; H01M 4/48; H01M 4/62; H01M 10/052;
   Y02E 60/10**

(86) International application number:
   **PCT/KR2022/017126**

(87) International publication number:
   **WO 2023/085691 (19.05.2023 Gazette 2023/20)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority:  **11.11.2021   KR 20210154386**

(71) Applicant: **LG Energy Solution, Ltd.**
   **Seoul 07335 (KR)**

(72) Inventors:
   • **PARK, Su Jin**
     **Daejeon 34122 (KR)**

   • **LEE, Jaewook**
     **Daejeon 34122 (KR)**
   • **PARK, Soojin**
     **Pohang-si Gyeongsangbuk-do 37673 (KR)**
   • **SON, Hye Bin**
     **Pohang-si Gyeongsangbuk-do 37673 (KR)**
   • **JE, Minjun**
     **Pohang-si Gyeongsangbuk-do 37673 (KR)**

(74) Representative: **Hoffmann Eitle**
   **Patent- und Rechtsanwälte PartmbB
   Arabellastraße 30
   81925 München (DE)**

(54) **ANODE COMPOSITION, ANODE FOR LITHIUM SECONDARY BATTERY COMPRISING SAME, LITHIUM SECONDARY BATTERY COMPRISING ANODE, AND METHOD FOR PREPARING ANODE COMPOSITION**

(57)    The present application relates to a negative electrode composition, a negative electrode for a lithium secondary battery, including the same, a lithium secondary battery including the negative electrode, and a method for preparing a negative electrode composition.

[Figure 1]

EP 4 345 946 A1

**Description**

[Technical Field]

This application claims priority to and the benefit of Korean Patent Application No. 10-2021-0154386 filed in the Korean Intellectual Property Office on November 11, 2021, the entire contents of which are incorporated herein by reference.

The present application relates to a negative electrode composition, a negative electrode for a lithium secondary battery, including the same, a lithium secondary battery including the negative electrode, and a method for preparing a negative electrode composition.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by together using a silicon-based compound such as Si/C or SiOx, which has a 10-fold higher capacity than a graphite-based material, as a negative electrode active material. A silicon-based compound, which is a high-capacity material, has a large capacity compared to graphite that is currently used, but has a problem in that the volume expands rapidly during the charging process to disconnect the conductive path, thereby degrading the battery characteristics.

Thus, to solve problems when the silicon-based compound is used as a negative electrode active material, measures to adjust the driving potential, additionally, measures to suppress the volume expansion itself such as methods of further coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate, so that there is still a limitation in the commercialization of preparation of a battery having a negative electrode with a high content of the silicon-based compound.

In addition, lithium secondary batteries are typically manufactured using lithium-intercalated compounds such as $LiCoO_2$ and $LiMn_2O_4$ for the positive electrode, and non-lithium-intercalated materials such as carbon-based and Si-based materials for the negative electrode, and during charging, lithium ions intercalated into the positive electrode move to the negative electrode through the electrolyte solution, and during discharging, the lithium ions move from the negative electrode to the positive electrode again. Lithium, which moves from the positive electrode to the negative electrode during the charging reaction, reacts with the electrolyte solution to form a solid electrolyte interface (SEI) which is a type of passivation film on the surface of the negative electrode. This SEI can stabilize the structure of the negative electrode by suppressing the transfer of electrons required for the reaction between the negative electrode and the electrolyte solution to prevent the decomposition reaction of the electrolyte, whereas since the charge reaction is an irreversible reaction, and thus, causes the depletion of lithium ions, research has been conducted on an SEI layer that is more stable and can utilize the above advantages.

Therefore, there is a need for research on a silicon-based active material itself capable of preventing the conductive path from being damaged according to the volume expansion of the silicon-based compound even when the silicon-based compound is used as an active material in order to improve the capacity performance, and the formation of a more stable SEI layer.

<Related Art Documents>

Japanese Patent Application Laid-Open No. 2009-080971

[Detailed Description of the Invention]

[Technical Problem]

It has been found that when a silicon-based active material, which was coated with a coating layer doped with particularly a specific element, was used in order to ameliorate the volume expansion problem of the silicon-based active material while recognizing the above problems, a more stable film was formed on the negative electrode while alleviating the rapid volume expansion of the silicon-based active material during charging and discharging.

Therefore, the present application relates to a negative electrode composition, a negative electrode for a lithium secondary battery, including the same, a lithium secondary battery including the negative electrode, and a method for preparing a negative electrode composition.

[Technical Solution]

An exemplary embodiment of the present specification provides a negative electrode composition including: a silicon-based active material; a negative electrode conductive material; and a negative electrode binder, in which the surface of the silicon-based active material includes a carbon coating layer, the carbon coating layer is doped with fluorine (F), and the silicon-based active material includes one or more selected from the group consisting of SiOx (x=0) and SiOx (0<x<2), and includes the SiOx (x=0) in an amount of 70 parts by weight or more based on 100 parts by weight of the silicon-based active material.

In an exemplary embodiment provides a method for preparing a negative electrode composition, the method including: preparing a silicon-based active material including a carbon coating layer doped with fluorine (F) at a surface thereof; forming a mixture by mixing a negative electrode conductive material and a negative electrode binder; performing a first mixing by adding water to the mixture; and performing a second mixing by adding a silicon-based active material including a fluorine (F)-doped carbon coating layer to the mixed mixture, wherein the silicon-based active material includes one or more selected from the group consisting of SiOx (x=0) and SiOx (0<x<2), and includes the SiOx (x=0) in an amount of 70 parts by weight or more based on 100 parts by weight of the silicon-based active material.

In still another exemplary embodiment provides a negative electrode for a lithium secondary battery, including: a negative electrode current collector layer; and a negative electrode active material layer including the negative electrode composition according to the present application formed on one surface or both surfaces of the negative electrode current collector layer.

Finally, a lithium secondary battery is provided, including: a positive electrode; the negative electrode for a lithium secondary battery according to the present application; a separator provided between the positive electrode and the negative electrode; and an electrolyte.

[Advantageous Effects]

The negative electrode composition according to an exemplary embodiment of the present invention is a negative electrode composition in which upon using a silicon-based active material, which is a high-capacity material in order to manufacture a high-capacity battery, the characteristics of the silicon-based active material itself are adjusted rather than adjusting the characteristics of a conductive material and a binder according to the volume expansion of the silicon-based active material, and is characterized in that the surface of the silicon-based active material includes a carbon coating layer, and by using a carbon coating layer doped with fluorine (F) as the carbon coating layer, fluorine as doped into the carbon coating layer can react with FEC, thereby forming a more stable LiF film on the negative electrode together with an SEI layer, while alleviating the rapid volume expansion of the silicon-based active material during charging and discharging.

Although only a graphite-based compound is generally used as a negative electrode active material in the related art, attempts to mix silicon-based compounds to be used in order to increase capacity are increasing as the demand for large-capacity batteries has recently increased, and in particular, the negative electrode composition according to an exemplary embodiment of the present invention is a negative electrode composition in which a silicon-based active material includes one or more selected from the group consisting of SiOx (x=0) and SiOx (0<x<2), and includes the SiOx (x=0) in an amount of 70 parts by weight or more based on 100 parts by weight of the silicon-based active material, and includes a high content of pure Si particles, and thus is characterized by being capable of manufacturing a negative electrode with a high capacity and a high density.

The negative electrode composition according to the present application is characterized in that, it includes a high content of pure Si particles, and thus is capable of obtaining a negative electrode with a high capacity and a high density, and simultaneously, in order to solve problems such as volume expansion caused by including a high content of pure Si particles, a silicon-based active material including the high content of pure Si particles itself is coated with a carbon layer including fluorine and then used, so that it is capable of solving the problem of volume expansion and utilizing the advantage of a silicon-based active material .

That is, the case of using a silicon-based active material which includes a specific content of silicon particles and is surface-treated as in the present invention is characterized in that the volume expansion during charging and discharging can also be minimized as the negative electrode composition according to the present invention is used, compared to the case of using an existing silicon-based active material.

[Brief Description of Drawings]

FIG. 1 is a view illustrating the stacking structure of a negative electrode for a lithium secondary battery according to an exemplary embodiment of the present application.
FIG. 2 is a view illustrating the stacking structure of a lithium secondary battery according to an exemplary embodiment of the present application.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the average particle diameter, and means the particle diameter at the n% point of the cumulative distribution of the number of particles according to the particle diameter. That is, D50 is the particle diameter at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode composition including: a silicon-based active material; a negative electrode conductive material; and a negative electrode binder, in which the surface of the silicon-based active material includes a carbon coating layer, the carbon coating layer is doped with fluorine (F), and the silicon-based active material includes one or more selected from the group consisting of SiOx (x=0) and SiOx (0<x<2), and includes the SiOx (x=0) in an amount of 70 parts by weight or more based on 100 parts by weight of the silicon-based active material.

The negative electrode composition according to an exemplary embodiment of the present invention is a negative electrode composition in which upon using a silicon-based active material, which is a high-capacity material in order to manufacture a high-capacity battery, the characteristics of the silicon-based active material itself are adjusted rather than adjusting the characteristics of a conductive material and a binder according to the volume expansion of the silicon-based active material, and is characterized in that the surface of the silicon-based active material includes a carbon coating layer, and by using a carbon coating layer doped with fluorine (F) as the carbon coating layer, fluorine as doped into the carbon coating layer can react with FEC, thereby forming a more stable LiF film on the negative electrode together with an SEI layer, while alleviating the rapid volume expansion of the silicon-based active material during charging and discharging.

In an exemplary embodiment of the present application, provided is a negative electrode composition in which the silicon-based active material includes one or more selected from the group consisting of SiOx (x=0) and SiOx (0<x<2), and includes 70 parts by weight or more of the SiOx (x=0) based on 100 parts by weight of the silicon-based active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, the silicon-based active material may include metal impurities, and in this case, the metal impurities are metals which may be generally included in the silicon-based active material, and the content thereof may be 1 part by weight or less, 0.1 parts by weight or less based on 100 parts by weight of the entire silicon-based active material.

In an exemplary embodiment of the present application, for the silicon-based active material, particularly, pure silicon (Si) may be used as the silicon-based active material. The use of pure silicon (Si) as the silicon-based active material may mean that based on the total 100 parts by weight of the silicon-based active material as described above, pure Si particles (SiOx (x=0)), which are not bound to other particles or elements, are included in the above range.

The silicon-based active material according to the present application includes the SiOx (x=0) in an amount of 70 parts by weight or more based on 100 parts by weight of the silicon-based active material. When compared to a silicon-based active material that uses SiOx (0<x<2)-based material as a main material, the SiOx (0<x<2)-based material has a disadvantage in that a theoretical capacity is much lower than that of the silicon-based active material of the present application. That is, when an SiOx (0<x<2)-based active material is used, conditions equivalent to the charge and discharge capacities compared to the case of having the silicon-based active material of the present invention cannot be implemented no matter what treatment is applied to the active material itself.

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

Therefore, in the case of the present invention, while using only a pure silicon-based active material as a negative electrode active material in order to improve the capacity performance, the surface of the silicon-based active material is coated with a specific material as described above in order to solve the aforementioned problems, and the present invention is characterized in that, while alleviating the volume expansion of the silicon-based active material particularly through carbon coating, fluorine as doped into the carbon coating layer reacts with FEC to form a more stable LiF inorganic film together with an SEI layer, thereby solving existing problems.

Meanwhile, the silicon-based active material of the present invention may have an average particle diameter (D50) of 5 um to 10 um, specifically 5.5 um to 8 $\mu$m, and more specifically 6 um to 7 um. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the above lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfied the above range, excessively large silicon particles are eliminated to form a smooth surface of the negative electrode, and accordingly, it is possible to prevent the heterogeneous phenomenon of the current density during charging and discharging.

In an exemplary embodiment of the present application, the silicon-based active material generally has a characteristic BET specific surface area. The BET specific surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET specific surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode composition in which the silicon-based active material is present in an amount of 60 parts by weight or more based on 100 parts by weight of the negative electrode composition.

In another exemplary embodiment, the silicon-based active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 80 parts by weight or less, based on 100 parts by weight of the negative electrode composition.

The negative electrode composition according to the present application has a feature in that, even though a silicon-based active material having a remarkably high capacity is used in the above range, by using a specific surface coating which can suppress the volume expansion rate in the charging and discharging process, the performance of the negative electrode does not deteriorate and output characteristics at charging and discharging are excellent even though the above range is included.

In an exemplary embodiment of the present application, the silicon-based active material may have a non-spherical form, and the sphericity thereof is, for example, 0.9 or less, for example 0.7 to 0.9, for example, 0.8 to 0.9, and for example, 0.85 to 0.9.

In the present application, the sphericity is determined by the following Equation 1, where A is the area and P is the boundary line.

$$[\text{Equation 1}]$$

$$4\pi A/P^2$$

The surface of the silicon-based active material according to the present application includes a carbon coating layer, the carbon coating layer is doped with fluorine (F), and the silicon-based active material itself is formed of a material including SiOx (x=0) and SiOx (0<x<2), and includes both a case where one or more particles selected from the group consisting of the SiOx (x=0) and SiOx (0<x<2) included in the silicon-based active material each have a carbon coating layer including fluorine, and a case where secondary particles formed by aggregating one or more particles selected from the group consisting of the SiOx (x=0) and SiOx (0<x<2) have a carbon coating layer including fluorine.

In an exemplary embodiment of the present application, the silicon-based active material may include one or more selected from the group consisting of SiOx (x=0), SiOx (0<x<2), SiC, and a Si alloy.

In an exemplary embodiment of the present application, provided is a negative electrode composition in which fluorine (F) doped in the carbon coating layer is formed of a single bond of carbon and fluorine (F).

In an exemplary embodiment of the present application, the thickness of the carbon coating layer may satisfy a range of 1 nm or more and 20 nm or less, preferably 5 nm or more and 15 nm or less and 10 nm or more and 15 nm or less.

In an exemplary embodiment of the present application, the content of carbon included in the carbon coating layer may be 5 parts by weight or more and 20 parts by weight or less based on 100 parts by weight of the silicon-based active material.

In another exemplary embodiment, the content of carbon included in the carbon coating layer may satisfy a range of 5 parts by weight or more and 20 parts by weight or less, preferably 7 parts by weight or more and 15 parts by weight or less based on 100 parts by weight of the silicon-based active material.

In an exemplary embodiment of the present application, provided is a negative electrode composition including the fluorine (F) in an amount of 0.1 parts by weight or more and 20 parts by weight or less based on 100 parts by weight of the silicon-based active material.

In another exemplary embodiment, the fluorine (F) may be 0.1 parts by weight or more and 20 parts by weight or less, preferably 0.1 parts by weight or more and 10 parts by weight or less, and more preferably 0.2 parts by weight or more and 5 parts by weight or less, and may satisfy a range of 3 parts by weight or less and 1 part by weight or less based on 100 parts by weight of the silicon-based active material.

As the aforementioned fluorine is included based on the silicon-based active material, the thickness of the coating layer is appropriate, so that the capacity per weight may be maintained, and it is characterized that while alleviating the rapid volume expansion of the silicon-based active material during charging and discharging, the carbon coating layer may be doped with fluorine in the parts by weight to react with FEC, thereby forming a more stable LiF film together with an SEI layer on the negative electrode.

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, even though characteristics of the silicon-based active material itself are adjusted according to the present application as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a particulate conductive material, a planar conductive material, and a linear conductive material.

In an exemplary embodiment of the present application, the particulate conductive material may be used to enhance the conductivity of the negative electrode, and is preferably a conductive material having conductivity without inducing a chemical change. Specifically, the conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the particulate conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, the functional group content (volatile matter) of the particulate conductive material may satisfy 0.01% or more and 1% or less, preferably 0.01% or more and 0.3% or less, and more preferably 0.01% or more and 0.1% or less.

In particular, when the functional group content of the particulate conductive material satisfies the above range, a functional group present on the surface of the particulate conductive material is present, so that when water is used as a solvent, the particulate conductive material may be smoothly dispersed in the solvent. In particular, in the present invention, as silicon particles and a specific binder are used, it is possible to reduce the functional group content of the particulate conductive material, and accordingly, the present invention has an effect excellent in improving dispersibility.

In an exemplary embodiment of the present application, it is characterized in that the particulate conductive material having a functional group content in the above range is included along with the silicon-based active material, and the functional group content may be adjusted according to the degree to which the particulate conductive material is heat-treated.

That is, in the manufacture of the particulate conductive material, a high functional group content may mean that there are a large amount of foreign materials, and a low functional group content may mean that more heat treatment process has been conducted, and the particulate conductive material according to the present application is characterized in that, in order to satisfy the functional group content within the above range, the functional group content range is satisfied by partially heat-treating the particulate conductive material.

Specifically, as the dispersibility of the particulate conductive material is improved, even when the content of the particulate conductive material is increased in a negative electrode slurry having the same solid content, the viscosity of the negative electrode slurry may be maintained at an appropriate level, so that the uniformity of the negative electrode formed may be improved while maintaining the stable processability state.

In an exemplary embodiment of the present application, the particulate conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 um to 7 um, specifically 3 um to 6 $\mu$m, and more specifically 4 um to 5 um. When the average particle diameter satisfied the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, there is provided a negative electrode composition, wherein the planar conductive material has a D10 of 0.5 um or more and 1.5 um or less, a D50 of 2.5 um or more and 3.5 um or less, and a D90 of 7.0 um or more and 15.0 um or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the electrode performance may be affected by the dispersion effect to some extent, therefore it may be particularly desirable to use a low specific surface area planar conductive material that does not cause a problem in dispersion as the planar conductive material according to the present application.

In an exemplary embodiment of the present application, the planar conductive material may have a BET specific surface area of $1m^2/g$ or more.

In another exemplary embodiment, the planar conductive material may have a BET specific surface area of $1m^2/g$ or more and 500 $m^2/g$ or less, preferably $5m^2/g$ or more and $300m^2/g$ or less, and more preferably $5m^2/g$ or more and $300m^2/g$ or less.

In still another exemplary embodiment, the planar conductive material is a high specific surface area planar conductive material, and the BET specific surface area may satisfy a range of 50 $m^2/g$ or more and 500 $m^2/g$ or less, preferably 80 $m^2/g$ or more and 300 $m^2/g$ or less, and more preferably 100 $m^2/g$ or more and 300 $m^2/g$ or less.

In yet another exemplary embodiment, the planar conductive material is a low specific surface area planar conductive material, and the BET specific surface area may satisfy a range of 1 $m^2/g$ or more and 40 $m^2/g$ or less, preferably 5 $m^2/g$ or more and 30 $m^2/g$ or less, and more preferably 5 $m^2/g$ or more and 25 $m^2/g$ or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in substantially the same orientation as a longitudinal axis of the carbon nanotube unit. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, provided is a negative electrode composition, in which the negative electrode conductive material is included in an amount of 10 parts by weight or more and 40 parts by weight or less, based on 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less, based on 100 parts by weight of the negative electrode composition.

In an exemplary embodiment of the present application, provided is a negative electrode composition in which the negative electrode conductive material includes a planar conductive material; and a linear conductive material, and includes 80 part by weight or more and 99.5 parts by weight or less of the planar conductive material; and 0.5 parts by weight or more and 20 parts by weight or less of the linear conductive material, based on 100 parts by weight of the negative electrode conductive material.

In another exemplary embodiment, the planar conductive material may be included in an amount of 80 parts by weight or more and 99.5 parts by weight or less, preferably 85 parts by weight or more and 99 parts by weight or less, and more preferably 90 parts by weight or more and 98 parts by weight or less, based on 100 parts by weight of the negative electrode conductive material.

In still another exemplary embodiment, the linear conductive material may be included in an amount of 0.5 parts by weight or more and 20 parts by weight or less, preferably 1 part by weight or more and 15 parts by weight or less, and more preferably 2 parts by weight or more and 10 parts by weight or less, based on 100 parts by weight of the negative electrode conductive material.

In an exemplary embodiment of the present application, as the negative electrode conductive material includes a particulate conductive material, a planar conductive material and a linear conductive material and each satisfies the composition and ratio, the negative electrode conductive material has a feature in that the service life characteristics of the existing lithium secondary battery are not greatly affected, and particularly when a planar conductive material and a linear conductive material are included, points where the battery can be charged and discharged are increased, so that output characteristics at a high C-rate are excellent and the amount of hightemperature gas generated is reduced .

The negative electrode conductive material according to the present application has a completely different configuration from a conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the plate-like conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the plate-like conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 30 parts by weight or less, preferably 25 parts by weight or less, and more preferably 20 parts by weight or less, and may be included in an amount of 5 parts by weight or more and 10 parts by weight or more, based on 100 parts by weight of the negative electrode composition.

Compared to the existing carbon-based negative electrode, when a Si-based material is used in the negative electrode, a water-based binder is applied by the aforementioned parts by weight, so that a particulate conductive material having a low functional group content can be used, and depending on the feature, the particulate conductive material has hydrophobicity to have a feature in which the bonding strength with the conductive material/binder becomes excellent.

In an exemplary embodiment of the present application, provided is a method for preparing a negative electrode composition, the method including: preparing a silicon-based active material including a carbon coating layer doped with fluorine (F) at a surface thereof; forming a mixture by mixing a negative electrode conductive material and a negative electrode binder; performing a first mixing by adding water to the mixture; and performing a second mixing by adding a silicon-based active material including a fluorine (F)-doped carbon coating layer to the mixed mixture, wherein the silicon-based active material includes one or more selected from the group consisting of SiOx (x=0) and SiOx (0<x<2), and includes the SiOx (x=0) in an amount of 70 parts by weight or more based on 100 parts by weight of the silicon-based active material.

In the method for preparing the negative electrode composition, each composition contained in the negative electrode composition may be the same as described above.

In an exemplary embodiment of the present application, provided is a method for preparing a negative electrode composition, in which the preparing of the silicon-based active material including the carbon coating layer coated with fluorine (F) at a surface thereof includes: adding a silicon-based active material to a polymer solution including fluorine (F); bonding a polymer including fluorine (F) to the surface of the silicon-based active material by adding ethanol to the polymer solution; and carbonizing the bonded polymer.

In an exemplary embodiment of the present application, the carbonizing of the bonded polymer may be carbonizing a polymer including fluorine (F) on the surface of the silicon-based active material.

In an exemplary embodiment of the present application, the polymer including fluorine (F) can be used without limitation as long as it is a material that provides fluorine (F) and carbon (C) atoms, and specifically, polyvinylidenefluoride (PVdF), Teflon, or the like may be used, but the polymer including fluorine (F) is not limited thereto.

In an exemplary embodiment of the present application, a polymer solution including fluorine (F) can be used without being limited thereto as long as it can dissolve the polymer including fluorine (F), but specifically, dimethylformamide (DMF) may be used.

In an exemplary embodiment of the present application, the adding of the silicon-based active material to the polymer solution including fluorine (F) may include adding the silicon-based active material according to the present application to a polymer solution including fluorine (F), and may further include performing stirring within a range of 1 hour to 12 hours after the addition.

In an exemplary embodiment of the present application, a carbon coating layer doped with fluorine may be formed on the surface of the silicon-based active material of the present application through the carbonizing of the polymer.

In an exemplary embodiment of the present application, the carbonizing of the polymer may include performing a heat treatment in an inert gas atmosphere in a hightemperature furnace at 500°C to 1000°C for 30 minutes to 3 hours.

Through the aforementioned carbonizing process, the silicon-based active material according to the present application may be surface-modified into a silicon-based active material including a carbon coating layer doped with fluorine (F) at a surface thereof.

In an exemplary embodiment of the present application, provided is a method for preparing a negative electrode composition in which in the first mixing and second mixing steps, mixing is performed at 2,000 rpm to 3,000 rpm for 10 minutes to 60 minutes.

In an exemplary embodiment of the present application, a negative electrode for a lithium secondary battery may be formed by coating one surface or both surfaces of a current collector with a negative electrode slurry including the negative electrode composition.

In an exemplary embodiment of the present application, the negative electrode slurry may include: a negative electrode composition; and a slurry solvent.

In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, provided is a negative electrode for a lithium secondary battery, including: a negative electrode current collector layer; and a negative electrode active material layer including the negative electrode composition according to the present application formed on one surface or both surfaces of the current collector layer.

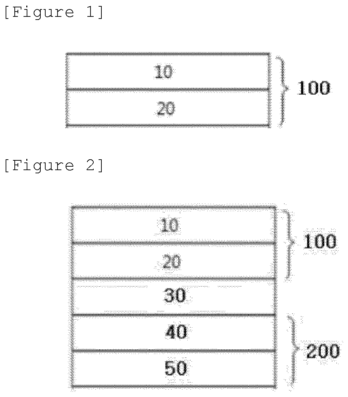

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

In an exemplary embodiment of the present application, the negative electrode current collector generally has a thickness of 1 um to 100 um. The negative electrode current collector is not particularly limited as long as the negative electrode current collector has high conductivity without causing a chemical change to the battery, and for example, it is possible to use copper, stainless steel, aluminum, nickel, titanium, calcined carbon, copper or stainless steel surface-treated with carbon, nickel, titanium, silver, and the like, an aluminum-cadmium alloy, and the like. In addition, the negative electrode current collector may also increase the bonding strength of a negative electrode active material by forming fine convex and concave irregularities on the surface thereof, and the negative electrode current collector may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 um or more and 100 um or less, and the negative electrode active material layer has a thickness of 20 um or more and 500 um or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 2 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 um to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{i+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.6$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.6$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

In an exemplary embodiment of the present application, the positive electrode active material includes a lithium composite transition metal compound including nickel (Ni), cobalt (Co) and manganese (Mn), the lithium composite transition metal compound includes single particles or secondary particles, and the single particles may have an average particle diameter (D50) of 1 um or more.

For example, the single particles may have an average particle diameter (D50) of 1 um or more and 12 um or less, 1 um or more and 8 um or less, 1 um or more and 6 um or less, more than 1 um and 12 um or less, more than 1 um and 8 um or less, or more than 1 um and 6 um or less.

Even though the single particles are formed as small particle diameters having an average particle diameter (D50) of 1 um or more and 12 um or less, the particle strength may be excellent. For example, the single particles may have a particle strength of 100 to 300 MPa when rolled with a force of 650 kgf/cm$^2$. As a result, even though the single particles are rolled with a strong force of 650 kgf/cm$^2$, a phenomenon in which the number of particulates in the electrode is increased due to cracking of the particles is alleviated, thereby improving the service life characteristics of the battery.

The single particles may be prepared by mixing a transition metal precursor and a lithium raw material and firing the resulting mixture. The secondary particles may be prepared by a method different from the single particles, and the composition thereof may be the same as or different from that of the single particles.

The method of forming the single particles is not particularly limited, but in general, single particles may be formed by increasing the firing temperature to achieve overfiring, and single particles may be prepared by a method of using an additive such as a grain growth promoter that helps overfiring or changing a starting material, and the like.

For example, the firing is performed at a temperature capable of forming single particles. In order to form the single particles, the firing needs to be performed at a temperature higher than that in the preparation of the secondary particles, and for example, when the composition of the precursor is the same, the firing needs to be performed at a temperature about 30°C to 100°C higher than that when the secondary particles are prepared. The firing temperature for forming the single particles may vary depending on the metal composition in the precursor, and for example, when a high-Ni NCM-based lithium composite transition metal oxide having a nickel (Ni) content of 80 mol% or more is desired to be formed as a single particle, the firing temperature may be 700°C to 1000°C, preferably approximately 800°C to 950°C. When the firing temperature satisfies the above range, a positive electrode active material including single particles with excellent electrochemical properties may be prepared. When the firing temperature is less than 790°C, a positive electrode active material including a lithium composite transition metal compound in the form of secondary particles may be prepared, and when the firing temperature exceeds 950°C, the firing may occur excessively, so that a layered crystal structure may not be properly formed, thereby degrading the electrochemical properties.

In the present specification, the single particle is a term used to differentiate from secondary particles formed by aggregation of tens to hundreds of primary particles in the related art, and is a concept including the form of a single particle composed of one primary particle and a pseudo-single particle which is an aggregate of 30 or less primary particles.

Specifically, in the present invention, the single particle may be in the form of a single particle composed of one primary particle or a pseudo-single particle which is an aggregate of 30 or less primary particles, and secondary particles may be in the form of aggregation of several hundred primary particles.

In an exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be in the form of a single particle composed of one primary particle or a pseudo-single particle which is an aggregate of 30 or less primary particles, and secondary particles may be in the form of aggregation of several hundred primary particles.

The above-described lithium composite transition metal compound may further include secondary particles. A secondary particle refers to a form formed by aggregation of primary particles, and may be distinguished from the concept of a single particle including the form of one primary particle, one single particle or a pseudo-single particle which is an aggregate of 30 or less primary particles.

The secondary particles may have a particle diameter (D50) of 1 um to 20 um, 2 um to 17 um, preferably 3 um to 15 um. The secondary particles may have a specific surface area (BET) of 0.05 $m^2$/g to 10 $m^2$/g, preferably 0.1 $m^2$/g to 1 $m^2$/g, and more preferably 0.3 $m^2$/g to 0.8 $m^2$/g.

In additional exemplary embodiments of the present application, the secondary particle is an aggregate of primary particles, and the primary particles have an average particle diameter (D50) of 0.5 um to 3 um. Specifically, the secondary particle may be in the form of aggregation of several hundred primary particles, and the primary particles may have an average particle diameter (D50) of 0.6 um to 2.8 um, 0.8 um to 2.5 um, or 0.8 um to 1.5 um.

When the average particle diameter (D50) of the primary particles satisfies the above range, a single particle positive electrode active material with excellent electrochemical properties may be formed. When the average particle diameter (D50) of the primary particles is too small, the number of aggregated primary particles forming the lithium-nickel-based oxide particles increases, so the effect of suppressing the occurrence of particle cracking during rolling is reduced, and when the average particle diameter (D50) of the primary particles is too large, the lithium diffusion path inside the primary particles becomes long, so the resistance increases and the output characteristics may deteriorate.

According to additional exemplary embodiments of the present application, the average particle diameter (D50) of the single particles is characterized by being smaller than the average particle diameter (D50) of the secondary particles. Therefore, even though the single particles are formed of small particle diameters, the single particles may have excellent particle strength, and the excellent particle strength may alleviate a phenomenon in which the number of particulates in the electrode is increased due to cracking of the particles, thereby improving the service life characteristics of the battery.

In an exemplary embodiment of the present application, the average particle diameter (D50) of the single particles is 1 um to 18 um smaller than the average particle diameter (D50) of the secondary particles.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even though formed with a small particle diameter, and thus, the excellent particle strength alleviates a phenomenon in which the number of particulates in the electrode is increased due to cracking of the particles, so that there is an effect of improving the service life characteristics and improving the energy density of the battery.

According to additional exemplary embodiments of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles within the above range are included, excellent battery characteristics may be exhibited in combination with the above-described negative electrode material. In particular, when the amount of the single particles is 15 parts by weight or more, a phenomenon in which the number of particulates in the electrode is increased due to particle cracking during the rolling process after manufacturing the electrode may be alleviated, thereby improving the service life characteristics of the battery.

In an exemplary embodiment of the present application, the lithium composite transition metal compound may further include secondary particles, and the amount of the secondary particles may be 85 parts by weight or less based on 100 parts by weight of the positive electrode active material. The amount of the secondary particles may be 80 parts by weight or less, 75 parts by weight or less, or 70 parts by weight or less based on 100 parts by weight of the positive electrode active material. The amount of the secondary particles may be 0 parts by weight or more based on 100 parts by weight of the positive electrode active material.

When the above range is satisfied, the above-described effect due to the presence of the positive electrode active material of single particles may be maximized. When the positive electrode active material of the secondary particles is included, the components may be the same as those exemplified as the above-described single particle positive electrode active material, may be different components, and may mean a form of aggregation of single particle forms.

In an exemplary embodiment of the present application, the positive electrode active material may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less, in 100 parts by weight of the positive electrode active material layer.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a nonaqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because they have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^\sim$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Example 1>**

**Manufacture of negative electrode**

0.5 wt% of polyvinylidene fluoride (PvdF) was put into dimethylformamide (DMF), and the resulting mixture was sonicated for 1 hour and then stirred overnight. Thereafter, 2 wt% of Si was put into the solution, and the resulting solution was stirred for 3 hours, and then further stirred for 1 hour while dropping ethanol. After centrifuging three times with ethanol, the solution was vacuum-dried at 70°C for 12 hours, and then heat-treated at 700°C for 1 hour in an Ar atmosphere in a high-temperature furnace to obtain carbon-coated Si. In this case, the amount of coated carbon was 7% relative to Si, the coating thickness was 10 nm, and the amount of F was 0.2 wt% relative to Si.

A negative electrode slurry was prepared by using the Si prepared above as an active material (including a carbon coating layer including F in 100% Si) and adding the active material, a plate-like graphite conductive material (average particle diameter 3.5 um) as a first conductive material, SWCNT as a second conductive material, and acrylamide as a binder were added at a weight ratio of 79.5:10:0.5:10 to distilled water as a solvent.

Thereafter, a Cu foil having a thickness of 15 um was coated with a negative electrode active material layer to a thickness of 30 $\mu$m, and then dried at 130°C for 12 hours, and rolled at a negative electrode porosity of 40% to manufacture a negative electrode.

**<Example 2>**

A negative electrode was manufactured in the same manner as in Example 1, except that 2 wt% of polyvinylidene fluoride (PvdF) was put into dimethylformamide (DMF) in Example 1, and in this case, the amount of coated carbon was 12% relative to Si, the coating thickness was 13 nm, and the amount of F was 0.4 wt% relative to Si.

**<Example 3>**

A negative electrode was manufactured in the same manner as in Example 1, except that 0.25 wt% of polyvinylidene fluoride (PvdF) was put into dimethylformamide (DMF) in Example 1, and in this case, the amount of coated carbon was 4% relative to Si, the coating thickness was 5 nm, and the amount of F was 0.003 wt% relative to Si.

**<Example 4>**

A negative electrode was manufactured in the same manner as in Example 1, except that a negative electrode slurry was prepared by using the Si prepared above as an active material (including a carbon coating layer including F in 100% Si) and adding the active material, SWCNT as a conductive material and acrylamide as a binder at a weight ratio of 89.5:0.5:10 to distilled water as a solvent in Example 1.

**<Example 5>**

A negative electrode was manufactured in the same manner as in Example 1, except that a negative electrode slurry was prepared by using the Si prepared above as an active material (including a carbon coating layer including F in 100% Si) and adding the active material, particulate carbon black (Super-P), a plate-like graphite conductive material (an average particle diameter of 3.5 pm), and SWCNT as conductive materials and acrylamide as a binder at a weight ratio of 79.5:5:5:0.5:10 to distilled water as a solvent in Example 1.

**<Comparative Example 1>**

A negative electrode was manufactured in the same manner as in Example 1, except that an Si active material (100% Si), which does not include an F-doped carbon coating layer, was used in Example 1.

**<Comparative Example 2>**

A negative electrode was manufactured in the same manner as in Example 1, except that an SiO active material was used in Example 1.

**<Comparative Example 3>**

A negative electrode was manufactured in the same manner as in Example 1, except that SiO including no F and including 5 wt% of a carbon coating layer (including a carbon coating layer in 100% SiO) was used in Example 1.

**<Comparative Example 4>**

A negative electrode was manufactured in the same manner as in Example 1, except that an Si active material (100% Si) including a non-F-doped carbon coating layer was used in Example 1.

**<Manufacture of secondary battery>**

A positive electrode slurry was prepared by adding $LiNi_{0.6}Co_{0.2}Mn_{0.2}O_2$ (average particle diameter (D50) : 15 um) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 um) as a positive electrode current collector were coated with the positive electrode slurry in a loading amount of 537 mg/25 $cm^2$, and the aluminum current collector was roll-pressed and dried in a vacuum oven at 130°C for 10 hours to form a positive electrode active material layer (thickness: 65 um), thereby preparing a positive electrode (thickness of the positive electrode: 77 um, porosity of 260).

A lithium secondary battery was manufactured by interposing a polyethylene separator between the positive electrode and the negative electrode of each of the Examples and the Comparative Examples and injecting an electrolyte thereinto.

The electrolyte was obtained by adding 3 wt% of vinylene carbonate based on the total weight of the electrolyte to an organic solvent in which fluoroethylene carbonate (FEC) and diethyl carbonate (DMC) were mixed at a volume ratio of 30:70 and adding $LiPF_6$ as a lithium salt at a concentration of 1 M thereto.

**Experimental Example 1: Evaluation of coin half-cell initial efficiency**

The initial charge/discharge capacities and initial efficiencies of the lithium secondary batteries manufactured in the Examples and the Comparative Examples were evaluated using an electrochemical charger/discharger.

The capacity and efficiency per gram of a coin half-cell battery were calculated under the conditions of charging (0.1 C CC/CV charge 0.005 V 0.005 C cut) and discharging (0.1 C CC discharge, 1.5 V cut), and the results are shown in the following Table 1.

[Table 1]

|  | Charge (mAh/g) | Discharge (mAh/g) | Initial efficiency (%) |
|---|---|---|---|
| Example 1 | 3003 | 2762 | 92 |
| Example 2 | 2990 | 2751 | 92 |
| Example 3 | 3030 | 2727 | 90 |
| Example 4 | 3005 | 2674 | 89 |
| Example 5 | 2997 | 2727 | 91 |
| Comparative Example 1 | 3059 | 2753 | 90 |
| Comparative Example 2 | 1640 | 1230 | 75 |
| Comparative Example 3 | 1642 | 1199 | 73 |
| Comparative Example 4 | 2987 | 2629 | 88 |

**Experimental Example 2: Evaluation of coin half-cell capacity retention rate**

The capacity retention rates of the lithium secondary batteries manufactured in the Examples and the Comparative Examples were evaluated using an electrochemical charger/discharger.

The number of cycles until the capacity reached the 80% level was confirmed under the conditions of charging (0.5 C CC/CV charge 0.005 V 0.005 C cut) and discharging (0.5 C CC discharge 1.0 V cut) of the coin half-cell battery.

The capacity retention rate in the Nth cycle was evaluated by the following equation. The results are shown in the following Table 2.

[Equation]

Capacity retention rate (%) = {(Discharge capacity in the Nth cycle)/(Discharge capacity in the 1st cycle)} x 100

[Table 2]

|  | CHC capacity retention rate @SOH80% | Capacity during 2 C discharging (% 0.5 C discharge capacity) |
|---|---|---|
| Example 1 | 25 cycle | 90% |
| Example 2 | 24 cycle | 90% |
| Example 3 | 20 cycle | 830 |
| Example 4 | 20 cycle | 870 |
| Example 5 | 24 cycle | 850 |
| Comparative Example 1 | 19 cycle | 820 |
| Comparative Example 2 | 28 cycle | 900 |
| Comparative Example 3 | 27 cycle | 880 |
| Comparative Example 4 | 23 cycle | 850 |

Comparative Example 1 in Tables 1 and 2 is a case where pure Si is used as an active material but an F-doped carbon coating layer is not included, and Comparative Example 4 is a case where pure Si is used as an active material, but only a simple carbon coating layer is included. That is, it could be confirmed that Comparative Examples 1 and 4 have initial efficiencies in a range similar to those of the Examples using the same type of active material, but the capacity retention rate and discharge capacity in Table 2 were decreased. This is a result of the inability to alleviate the volume expansion of the active material and form a stable LiF film.

Furthermore, it could be confirmed that in the case of the present invention, pure Si (the silicon-based active material includes $SiO_x$ (x=0) and $SiO_x$ (0<x<2), and includes 70 parts by weight or more of the $SiO_x$ (x=0) based on 100 parts by weight of the silicon-based active material) was used as an active material, and the initial efficiency was deteriorated in the cases of Comparative Example 2 (SiO active material) and Comparative Example 3 (SiO active material)as compared with the cases of Examples 1 to 4 .

Specifically, Comparative Example 2 is a case of using a carbon layer doped with F on SiO, and Comparative Example 3 is a case of using only a carbon coating layer on SiO, and it could be confirmed that in the two cases, the initial efficiency may be increased by 1 to 2% compared to the SiO active material which has not been subjected to other treatments, but the initial efficiency is reduced compared to the Examples, and the charge/discharge capacity is decreased to very low levels compared to the case of using Pure Si as the active material.

That is, Comparative Examples 2 and 3, in which an SiO active material was used, said SiO being a 1:1 composite of Si and $SiO_2$, caused an irreversible reaction between the oxide and Li to exhibit a low initial efficiency, but the capacity retention rate may be evaluated well due to the subsequent reversible reaction as compared to the Si active material (see Table 2). However, as can be confirmed in Table 1, Comparative Examples 2 and 3 have a disadvantage in that the theoretical capacity is much lower than that of Si, and when an SiO active material is used, it is not possible to implement conditions equivalent to the charge and discharge capacity as in Example 1 of the present invention Therefore, it could be confirmed that the high-capacity lithium secondary battery intended in the present application could not be manufactured.

After all, as can be confirmed in Tables 1 and 2, it could be confirmed that the negative electrode composition according to an exemplary embodiment of the present invention is a negative electrode composition in which upon using a silicon-based active material, which is a high-capacity material in order to manufacture a high-capacity lithium secondary battery, the characteristics of the silicon-based active material itself are adjusted rather than adjusting the characteristics of a conductive material and a binder according to the volume expansion of the silicon-based active material, and is characterized in that the surface of the silicon-based active material includes a carbon coating layer, and by using a carbon coating layer doped with fluorine (F) as the carbon coating layer, fluorine as doped into the carbon coating layer can react with FEC, thereby forming a more stable LiF film on the negative electrode together with an SEI layer, while alleviating the rapid volume expansion of the silicon-based active material during charging and discharging.

In addition, Examples 1 and 2 are the cases where the amount of F doped is larger than that in Example 3, and the thickness of the coating layer is appropriate as the fluorine is included at the content as described above, so that it could be confirmed that the capacity per weight was much better than that of Example 3.

## Claims

1. A negative electrode composition comprising:

   a silicon-based active material; a negative electrode conductive material; and a negative electrode binder, wherein the surface of the silicon-based active material comprises a carbon coating layer, the carbon coating layer is doped with fluorine (F), and the silicon-based active material comprises one or more selected from the group consisting of SiOx (x=0) and SiOx (0<x<2), and comprises 70 parts by weight or more of the SiOx (x=0) based on 100 parts by weight of the silicon-based active material.

2. The negative electrode composition of claim 1, wherein the negative electrode conductive material comprises: a planar conductive material; and a linear conductive material, and the negative electrode conductive material comprises the planar conductive material and the linear conductive material in an amount of 80 parts by weight or more and 99.5 parts by weight or less; and 0.5 parts by weight or more and 20 parts by weight or less, respectively, based on 100 parts by weight of the negative electrode conductive material.

3. The negative electrode composition of claim 1, wherein the silicon-based active material is comprised in an amount of 60 parts by weight or more based on 100 parts by weight of the negative electrode composition.

4. The negative electrode composition of claim 1, wherein the negative electrode conductive material is comprised in an amount of 10 parts by weight or more and 40 parts by weight or less, based on 100 parts by weight of the negative electrode composition.

5. The negative electrode composition of claim 1, wherein fluorine (F) doped in the carbon coating layer is formed of a single bond of carbon and fluorine (F).

6. The negative electrode composition of claim 1, wherein the fluorine (F) is comprised in an amount of 0.1 parts by weight or more and 20 parts by weight or less based on 100 parts by weight of the silicon-based active material.

7. A method for preparing a negative electrode composition, the method comprising:

   preparing a silicon-based active material comprising a carbon coating layer doped with fluorine (F) at a surface thereof;
   forming a mixture by mixing a negative electrode conductive material and a negative electrode binder;
   performing a first mixing by adding water to the mixture; and
   performing a second mixing by adding a silicon-based active material comprising a fluorine (F)-doped carbon coating layer to the mixed mixture,
   wherein the silicon-based active material comprises one or more selected from the group consisting of SiOx (x=0) and SiOx (0<x<2), and comprises 70 parts by weight or more of the SiOx (x=0) based on 100 parts by weight of the silicon-based active material.

8. The method of claim 7, wherein the preparing of the silicon-based active material comprising the carbon coating layer doped with fluorine at a surface thereof comprises:

adding a silicon-based active material to a polymer solution comprising fluorine (F);
bonding a polymer comprising fluorine (F) to the surface of the silicon-based active material by adding ethanol to the polymer solution; and
carbonizing the bonded polymer.

9. The method of claim 7, wherein in the performing of the first mixing and the second mixing, mixing is performed at 2,000 rpm to 3,000 rpm for 10 minutes to 60 minutes.

10. A negative electrode for a lithium secondary battery, comprising:

a negative electrode current collector layer; and
a negative electrode active material layer comprising the negative electrode composition according to any one of claims 1 to 6 formed on one surface or both surfaces of the negative electrode current collector layer.

11. The negative electrode of claim 10, wherein the negative electrode current collector layer has a thickness of 1 um or more and 100 um or less, and
the negative electrode active material layer has a thickness of 20 um or more and 500 um or less.

12. A lithium secondary battery comprising:

a positive electrode;
the negative electrode for a lithium secondary battery according to claim 10;
a separator provided between the positive electrode and the negative electrode; and
an electrolyte.

[Figure 1]

[Figure 2]

## INTERNATIONAL SEARCH REPORT

International application No.

**PCT/KR2022/017126**

### A. CLASSIFICATION OF SUBJECT MATTER

**H01M 4/1395**(2010.01)i; **H01M 4/1391**(2010.01)i; **H01M 4/36**(2006.01)i; **H01M 4/38**(2006.01)i; **H01M 4/48**(2010.01)i; **H01M 4/62**(2006.01)i; **H01M 4/134**(2010.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/1395(2010.01); H01M 10/052(2010.01); H01M 10/0525(2010.01); H01M 10/0568(2010.01); H01M 4/134(2010.01); H01M 4/36(2006.01); H01M 4/38(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(negative electrode), 실리콘계 활물질(silicon based active material), 도전재(conductive material), 불소 도핑 탄소(F-doped carbon), 코팅(coating)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0097303 A (LG ENERGY SOLUTION, LTD.) 09 August 2021 (2021-08-09)<br>See paragraphs [0028]-[0030], [0120]-[0128], [0234]-[0236] and [0242]; and examples 1 and 2. | 1,3-12 |
| Y | | 2 |
| Y | KR 10-2020-0089568 A (LG CHEM, LTD.) 27 July 2020 (2020-07-27)<br>See example 1. | 2 |
| A | KR 10-2017-0078203 A (KOREA INSTITUTE OF SCIENCE AND TECHNOLOGY) 07 July 2017 (2017-07-07)<br>See entire document. | 1-12 |
| A | JP 2019-021451 A (TOYOTA INDUSTRIES CORP.) 07 February 2019 (2019-02-07)<br>See entire document. | 1-12 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 February 2023** | **27 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/017126**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0124769 A (LG CHEM, LTD.) 21 November 2018 (2018-11-21)<br>See entire document. | 1-12 |

Form PCT/ISA/210 (second sheet) (July 2022)

## INTERNATIONAL SEARCH REPORT
### Information on patent family members

International application No.

**PCT/KR2022/017126**

| Patent document cited in search report | | | Publication date (day/month/year) | Patent family member(s) | | | Publication date (day/month/year) |
|---|---|---|---|---|---|---|---|
| KR | 10-2021-0097303 | A | 09 August 2021 | CN | 114930577 | A | 19 August 2022 |
| | | | | EP | 4071857 | A1 | 12 October 2022 |
| | | | | WO | 2021-153987 | A1 | 05 August 2021 |
| KR | 10-2020-0089568 | A | 27 July 2020 | CN | 113692657 | A | 23 November 2021 |
| | | | | EP | 3893295 | A1 | 13 October 2021 |
| | | | | EP | 3893295 | A4 | 16 February 2022 |
| | | | | KR | 10-2439661 | B1 | 02 September 2022 |
| | | | | US | 2022-0149376 | A1 | 12 May 2022 |
| | | | | WO | 2020-149682 | A1 | 23 July 2020 |
| KR | 10-2017-0078203 | A | 07 July 2017 | KR | 10-1908524 | B1 | 16 October 2018 |
| | | | | US | 2017-0187032 | A1 | 29 June 2017 |
| JP | 2019-021451 | A | 07 February 2019 | None | | | |
| KR | 10-2018-0124769 | A | 21 November 2018 | CN | 110582876 | A | 17 December 2019 |
| | | | | CN | 110582876 | B | 24 June 2022 |
| | | | | EP | 3609001 | A1 | 12 February 2020 |
| | | | | EP | 3609001 | A4 | 25 March 2020 |
| | | | | KR | 10-2223723 | B1 | 05 March 2021 |
| | | | | US | 11322734 | B2 | 03 May 2022 |
| | | | | US | 2020-0168890 | A1 | 28 May 2020 |
| | | | | WO | 2018-208111 | A1 | 15 November 2018 |

Form PCT/ISA/210 (patent family annex) (July 2022)

## REFERENCES CITED IN THE DESCRIPTION

**Patent documents cited in the description**

- KR 1020210154386

- JP 2009080971 A